# EUROPEAN PATENT APPLICATION

(11) **EP 0 775 726 A1**
(43) Date of publication of application: **28.05.1997**
(21) Application number: 96308443.9
(22) Date of filing: 21.11.1996
(51) Int. Cl.: C08L 23/16, C08K 5/00

(54) **Curable ethylene-alpha olefin-diene elastomer composition**

(30) Priority: 22.11.1995 US 561804
(71) Applicant: UNION CARBIDE CHEMICALS & PLASTICS TECHNOLOGY CORPORATION, Danbury, Connecticut 06817-0001 (US)
(72) Inventor: Bernier, Robert Joseph Noel, Flemington, New Jersey 08822 (US); Valaitis, Joseph Kestutis, Bracksville, Ohio 44141 (US)
(74) Representative: Allard, Susan Joyce

(57) **Abstract**

There is provided a composition having improved co-curing characteristics with highly unsaturated diene rubbers comprising an ethylene-alpha olefin-diene elastomer preferably produced in a gas phase process and an accelerator; a blend of the gas phase ethylene-alpha olefin-diene (e.g. EPDM) composition with a highly unsaturated diene rubber, both of which find particular utility in tire sidewalls; and a process for co-curing a shaped elastomeric body utilizing the composition to a rubber article such as a tire carcass having at least one highly unsaturated diene rubber component.

## Description

### Field of the Invention

This invention relates to curable compositions comprising an ethylene-alpha olefin-diene elastomer in contact with elastomer compositions containing high levels of diene unsaturation.

### Background of the Invention

It has been long recognized that EPDM has excellent weathering resistance, good heat aging resistance, ozone resistance, good UV resistance, and the ability to accept high loadings of materials such as fillers (e.g., carbon black, silica, clay) and oils or other plasticizers with minimum loss of properties. In tire manufacturing, because of the relatively high cost of EPDM as compared to other elastomers such as natural rubber, styrene/butadiene copolymers and polybutadienes, EPDM has often been blended with these less costly elastomers to minimize cost while taking advantage of EPDM's performance strengths.

The use of EPDM in blends with polymers having high levels of diene unsaturation such as polybutadiene and natural rubber, for example, has been hampered by the difference in the cure rates of EPDM and the other constituents of the elastomeric blend. As a result, EPDM which has a low diene unsaturation level cures at a slower rate and does not achieve a useful cure state for optimum performance.

To mitigate the problems related to co-curing, the technology has evolved partly in the direction of using specially tailored accelerators which exhibit similar solubility in the various components of the blend. These accelerators are typified by the appendage of heavier hydrocarbon groups aimed at reducing their mobility or increasing their chemical affinity to EPDM,'thus, effecting an even distribution of the accelerator throughout the blend for co-cure enhancement. The benefit of these improvements are translated into lower heat build-up and higher tensile strength properties.

A second approach that has emerged to circumvent the co-curing problem of EPDM in blends has been the introduction and use of high molecular weight EPDM containing higher amounts of diene unsaturation. U.S. Patent No. 4,654,793 reports such a use in blends of EPDM and high diene elastomers. The examples delineate the improved performance the high molecular weight EPDM grades with high unsaturation levels in contrast to the unacceptable performance of a medium molecular weight EPDM grade having a mid-range composition of diene.

Co-curing of adjacent components of significantly dissimilar level of diene unsaturation is still a standing challenge as in the case of an all EPDM tire sidewall and the tire carcass for example. Neither tailored accelerator nor high molecular weight EPDM have proven to offer any advantage in this area. Traditionally, interfacial cured adhesion between elastomers with widely different cure rates has often been so low that bonding adhesives are used at the tire component interface. Alternatively, bonding promoters, most often resins, are added to the compositions which contain these elastomers in order to increase cured adhesion between them. Such attempts have included, for example, shear degradation of ultra-high molecular weight EPDM, attachment of certain N-chlorothiomides onto the EPDM polymer backbone, and halogenation of the EPDM.

EPDM compounds also show a lack of tack to other tire components during the tire construction phase. In the art, tack is the capacity of a surface of an uncured rubber or elastomer to adhere to the surface of another uncured rubber or elastomer. Tack is necessary to keep the tire components together until they are vulcanized. The use of tackifier cements between these tire components, or the direct addition of taokifier resins to the EPDM compounds are methods used to improve the tack characteristic of EPDM.

Accordingly, there is an on-going need for an EPDM elastomer composition having good interfacial co-cured adhesion and tack between the EPDM elastomer and other elastomers, preferably without the use of bonding adhesives or tackifing cements.

### Summary of the Invention

The present invention provides a composition having useful co-curing characteristics such as an improved cured state and scorch resistance with highly unsaturated rubber, comprising a particulate ethylene-alpha olefin-diene elastomer and an accelerator selected from the group consisting of a sulfenamide, a thiazole, a dithiocarbamate, a thiuram, a xanthate, a thiourea, and mixtures thereof. Preferably the alpha olefin has 3 to 12 carbon atoms, and most preferably the elastomer is an ethylene-propylene-diene.

There is further provided a process for interfacial co-curing of a shaped elastomeric body containing an ethylene-alpha olefin-diene polymer adjacent to at least one highly unsaturated rubber article which comprises (i) mixing an ethylene-alpha olefin-diene polymer , optionally a highly unsaturated rubber, an accelerator, and a curing agent to form an elastomeric composition, (ii) forming said elastomeric composition into a shaped elastomeric body, and (iii) co-curing said shaped elastomeric body onto a rubber article comprising a highly unsaturated rubber.

### Detailed Description of the Invention

The present invention has utility in roofing materials, automotive radiator hose, tire sidewall, automotive weather stripping and other applications which require the performance characteristics of ethylene-alpha olefin-diene elastomers, in particular, of an ethylene-propylene-diene elastomer (EPDM). The composition and co-curing process of the present invention is particularly useful in the manufacture of tire sidewalls and their subsequent co-adhesion to a tire carcass made of a highly unsaturated rubber such as a diene rubber.

In the ethylene-alpha olefin-diene elastomer utilized in the composition of the invention, the amount of ethylene in the elastomer ranges from about 40 to 85 % by weight, preferably about 40 to 77 % by weight, based upon the total elastomer. The amount of alpha-olefin in the elastomer ranges from about 15 % to 60 % by weight, preferably about 20 to 60 % by weight, based upon the total elastomer. And the amount of diene in the elastomer varies from about 0.1 % to 30 % by weight, preferably about 3 % to 15 % by weight and most preferably 3% to 10 % by weight, based upon the total elastomer.

The ethylene-alpha olefin-diene elastomer employed in the composition of the invention can be produced by any conventional polymerization such as slurry, solution, and fluidized bed processes. Preferably, the ethylene-alpha olefin-diene polymer entering the composition of the invention is in particulate form with an average particle size diameter of 7 mm or smaller. Also, preferably, the polymerization is conducted in a fluidized bed in the gas phase, generally at or above the sticking or softening temperature of the polymer, and, optionally and preferably, in the presence of inert particulate material selected from the group consisting of carbon black, silica, clay, talc, and mixtures thereof. The inert particulate material employed in the polymerization of the ethylene-alpha olefin-diene polymer ranges from about 0.3 to about 80 weight percent, preferably about 5 to 75 weight percent, most preferably 5 to 50 weight percent based on the weight of the polymer. Such polymerization processes are disclosed, for example, in U.S. Patent Nos. 4,994,534; 5,304,588; 5,317,036 and 5,453,471. It is understood that the ethylene-alpha olefin-diene polymer employed in the invention can include a blend of two or more ethylene-alpha olefin-diene polymers differing in, for example, molecular weight and/or amounts of ethylene, alpha olefin, diene, and inert particulate material used. In such case, the ethylene-alpha olefin diene elastomers are treated as a group for purposes of making up the 100 parts of the composition of the invention. The quantity of the other ingredients (accelerator, filler, and so forth) are then based on this 100 parts of the composition.

The ethylene-alpha olefin-diene polymers in the composition of the invention contain at least one non-conjugated diene. The diene can be straight chain, branched chain, or cyclic hydrocarbon dienes having from about 5 to about 15 carbon atoms. Examples of suitable non-conjugated dienes are straight chain acyclic dienes such as 1,4-hexadiene, 1,5-hexadiene, 1,7-octadiene, 1,9-decadiene and 1,6-octadiene. Illustrative branched chain acyclic dienes include such as 5-methyl-1,4-hexadiene, 3,7-dimethyl-1,6-octadiene, 3,7-dimethyl-1,7-octadiene and mixed isomers of dihydromyricene and dihydrocienene. Single ring alicyclic dienes can include, for example, 1,3-cyclopentadiene, 1,4-cyclohexadiene, 1,5-cycloctadiene and 1,5-cyclododecadiene. Illustrative multi-ring alicyclic fused and bridged ring dienes such as tetrahydroindene, methyl tetrahydroindene, dicyclopentadiene, bicyclo(2,2,1)-hepta-2,5-diene, alkenyl, alkylidene, cycloalkenyl and cycloalkylidene norbornenes such as 5-methylene-2-norbornene, 5-propenyl-2-norbornene, 5-iso-propylidene-2-norbornene, 5-(4-cyclopentenyl)-2-norbornene, 5-cyclohexylidene-2-norbornene, 5-vinyl-2-norbornene and norbornadiene such as 5-ethylidene-2-norborne can be employed in the process of the present invention. Dienes which are especially preferred include 1,4-hexadiene, dicyclopentadiene 1,3-cyclopentadiene, 1,7-octadiene, and 5-ethylidene-2-norbornene and mixtures thereof.

The accelerator in the composition of the invention is selected from the group consisting of a sulfenamide, a thiazole, a dithiocarbamate, a thiuram, a xanthate, a thiourea, guanidine, and mixtures thereof. Of these, sulfenamides are preferred. Sulfenamides that can be employed in the invention generally are within two classes -- benzothiazolsulfenamides, including bis-benzothiazolesulfenamides as disclosed in PCT/US91/05997, and thiocarbamylsulfenamides. Benzothiazolesulfenamides can be depicted as follows: 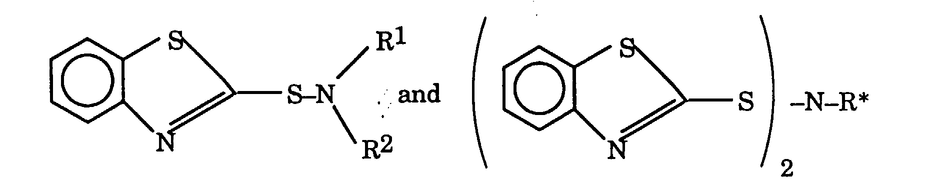 wherein R¹, R², and R* can be the same or different and represent hydrogen, a C₃ to C₉ branched, linear, or cycloalkyl group, such as, but not limited to, isopropyl, isobutyl, cycloalkenyl, tert-butyl, tert-amyl, t-octyl, as well as representing an aryl group, for example, benzyl, dibenzyl or dithiobenzyl, with the proviso that R¹ and R² cannot both be hydrogen. Preferred sulfenamides employed in the composition of the invention as an accelerator can be selected from the group consisting of 4-morpholinyl-2-benzothiazole disulfide; N-oxydiethylene-2-benzothiazole-sulfenamide; N-cyclohexyl-2-benzothiazolesulfenamide; N-isopropyl-2-benzothiazole-sulfenamide N-tert-butyl-2-benzothiazolesulfenamide; N,N-dicyclohexyl-2-benzothiazole-sulfenamide; N,N-diethyl-2-benzothiazole-sulfenamide; N,N-diisopropyl-2-benzothiazole-sulfenamide; and N-cycloalkylbis(2-benzothiazolsulfen)amides preferably wherein the alkyl is a linear or branched C₃ to C₉ and mixtures thereof. Examples of the bis(2-benzothiazole)sulfenamides can include N-cyclohexylbis(2-benzothiazole)sulfenamide; N-isopropylbis(2-benzothiazole)sulfenamide; N-tert-octylbis(2-benzothiazole)sulfenamide; N-tert-amylbis(2-benzothiazole)sulfenamide; N-isobutylbis(2-benzothiazole)sulfenamide; N-tert-butylbis(2-benzothiazole)sulfenamide; N-benzylbis(2-benzothiazole)sulfenamide; and N-dibenzylbis(2-benzothiazole)sulfenamide.

Suitable thiocarbamylsulfenamides are well known and disclosed, for example, in U.S. Patent No. 4,008,190. In general, N,N-(higher alkyl)thiocarbamylsulfenamides of the present invention have the formula 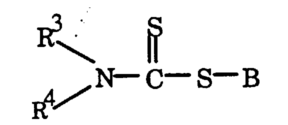 where B is selected from the group consisting of 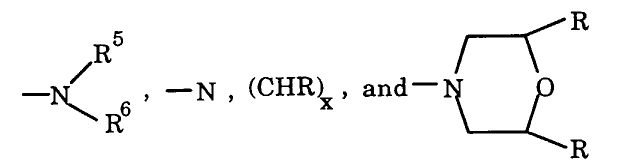 wherein R³ is hydrogen or the same as R⁴, and R⁴ is selected from the group consisting of alkyl radicals containing about 1 to about 4 carbon atoms, cycloalkyl radicals containing 4 to 7 carbon atoms in the ring, a phenyl radical, and an aralkyl radical or alkaryl radical containing 7 to about 12 carbon atoms; R is hydrogen or an alkyl radical containing 1 to 2 carbon atoms; x is 4 to 7; and R⁵ and R⁶ are alkyl radicals containing 6 to 30 carbon atoms. The alkyl radicals can be linear or branched and can contain primary, secondary and/or tertiary carbon atom configurations. The cycloalkyl radicals can be further substituted with alkyl radicals containing 1 to 4 carbon atoms. The thiocarbamylsulfenamide compounds contain at least 12 carbon atoms in the total of groups R⁵ and R⁶, and up to 60 carbon atoms.

Preferably, R⁵ and R⁶ are alkyl radical containing about 8 to about 24 carbon atoms and R⁵ and R⁶ are the same, i.e., the amine is symmetrical; and B is -NR^{1'}R^{2'}, wherein R^{1'} and R^{2'} are cycloalkyl radicals containing 5 to 7 carbon atoms in the ring. Examples of the most preferred compounds are N-oxydiethylenethiocarbamyl-N'-oxydiethylene sulfenamide, N,N-di(2-ethylhexyl)thiocarbamyl-N',N'-dicyclohexylsulfenamide, N,N-ditetradecylthiocarbamyl-N',N'-dicycloheptylsulfenamide, N,N,-dioctadecylthiocarbamyl-N',N'-dicyclohexylsulfenamide, N,N-dieicosylthiocarbamyl-N',N'-dicyclohexylsulfenamide, and mixtures thereof.

Illustrative thiazoles for use in the composition of the invention can include benzothiazyl disulfide, 2-mercaptobenzothiazole, and 2,2'-mercaptobenzothiazole disulfide, zinc 2-mercaptobenzothiazole, mixtures thereof, and the like.

Illustrative dithiocarbamates for use in the composition of the invention can include Bismate® (bismuth dimethyldithiocarbamate), Butyl Eight® (activated dithiocarbamate), Amyl Cadmate® (cadmium diamyldithiocarbamate), Ethyl Cadmate® (cadmium diethyldithiocarbamate), Cumate® (copper dimethyldithiocarbamate), Amyl Ledate® (lead diamyldithiocarbamate), Methyl Ledate® (lead dimethyldithiocarbamate), Ethyl Selenac® (selenium diethyldithiocarbamate), Methyl Selenac® (selenium dimethyldithiocarbate), Ethyl Tellurac® (tellurium diethyldithiocarbamate), Amyl Zimate® (zinc diamyldithiocarbamate), Butyl Zimate® (zinc di-n-butyldithiocarbamate), Ethyl Zimate® (zinc diethyldithiocarbamate), zinc dimethyldithiocarbamate and mixtures thereof.

Illustrative thiurams for use in the composition of the invention can include Sulfads® such as dipentamethylene thiuram hexasulfide, Butyl Tuads® such as tetrabutylthiuram disulfide, Captax-Tuads Blend® (a blend of 1 part 2-mercaptobenzothiazole and 2 parts tetramethylthiuram), Ethyl Tuads® such as tetraethylthiuram disulfide, Methyl-Ethyl Tuads® (a 60:40 blend of Methyl Tuads® and ethyl tuads), Methyl Tuads® such as tetramethylthiuram, and Unads® such as tetramethylthiuram monosulfide, and mixtures thereof.

An illustrative xanthate for use in the composition of the invention can include Propyl Zithate® such as zinc isopropyl xanthate. An illustrative thiadiazine for use as an additional accelerator herein is Vanax NP® (or activated thiadiazine).

Illustrative thioureas for use in the composition of the invention can include Thiate E® (trimethylthiourea), Thiate H® (1,3-diethylthiourea), and Thiate U® (1,3-dibutylthiourea), and mixtures thereof.

In the composition according to the invention, based on 100 parts by weight of ethylene-alpha olefin-diene terpolymer, the accelerator level is about 0.2 to 5.0 parts by weight, preferably 0.5 to 3.0 parts by weight. It is further understood that, when a sulfenamide is employed in the invention, one or more of the other above-mentioned accelerators can be employed as a second accelerator in a minor amount or portion (that is, less than 50% by weight of the total amount of accelerator employed in the composition, preferably less than 30%, and most preferably less than 10%.

To the composition according to the invention can be added additives usually used in the rubber industry. These additives can include, for example, one or more fillers, plasticizers, antioxidants and antiozonants, activators, tackifiers, adhesion promoters, homogenizing agents, peptizers, pigments, flame retardants, fungicides, and the like.

Fillers for use in the invention include carbon black; silicates of aluminum, magnesium, calcium, sodium, potassium and mixtures thereof; carbonates of calcium, magnesium and mixtures thereof; oxides of silicon, calcium, zinc, iron, titanium, and aluminum; sulfates of calcium, barium, and lead; alumina trihydrate; magnesium hydroxide; phenol-formaldehyde, polystyrene, and poly(alphamethyl)styrene resins; natural and synthetic fibers; and the like.

Plasticizers for use in the invention include petroleum oils such as ASTM D2226 aromatic, naphthenic and paraffinic oils; polyalkylbenzene oils; organic acid monoesters such as alkyl and alkoxyalkyl oleates and stearates; organic acid diesters such as dialkyl, dialkoxyalkyl, and alkyl aryl phthalates, terephthalates, sebacates, adipates, and glutarates; glycol diesters such as tri-, tetra-, and polyethylene glycol dialkanoates; trialkyl trimellitates; trialkyl, trialkoxyalkyl, alkyl diaryl, and triaryl phosphates; chlorinated paraffin oils; coumarone-indene resins; pine tars; vegetable oils such as castor, tall, rapeseed, and soybean oils and esters and epoxidized derivatives thereof; and the like.

Antioxidants and antiozonants for use in the invention include hindered phenols, bisphenols, and thiobisphenols; substituted hydroquinones; tris(alkylphenyl)phosphites; dialkylthiodiproprionates; phenylnaphthylamines; substituted diphenylamines; dialkyl, alkyl aryl, and diaryl substituted p-phenylene diamines; monomeric and polymeric dihydroquinolines; 2-(4-hydroxy-3,5-t-butylaniline)-4,6-bis(octylthio)-1,3,5-triazine, hexahydro-1,3,5-tris-β-(3,5-di-t-butyl-4-hydroxyphenyl)propionyl-s-triazine, 2,4,6-tris(n-1,4-dimethylpentyl-p-phenylenediamino)-1,3,5-triazine, tris-(3,5-di-t-butyl-4-hydroxy-benzyl)isocyanurate, nickel dibutyldithiocarbamate, 2-mercaptotolylimidazole and its zinc salt, petroleum waxes, and the like.

Other additives for use in the invention include activators (metal oxides such as zinc, calcium, magnesium, cadmium, and lead oxides; fatty acids such as stearic, lauric, oleic, behenic, and palmitic acids and zinc, copper, cadmium, and lead salts thereof; di-, tri-, and polyethylene glycols; and triethanolamine). Tackifiers (rosins and rosin acids, hydrocarbon resins, aromatic indene resins, phenolic methylene donor resins, phenolic thermosetting resins, resorcenol-formaldehyde resins, and alkyl phenol formaldehyde resins such as octyl-phenol-formaldehyde resin), homogenizing agents, peptizers, pigments, flame retardants, fungicides, and the like can also be employed in the composition of the invention.

The total amount of additives can range from about 40 to 800 parts by weight based upon 100 parts of the elastomers in the composition. In general, the amount of filler ranges from about 1 to 400 parts by weight of the polymer composition; the amount of cure activators ranges from about 0.1 to 10 phr; the amount of antioxidants and antiozonants and stabilizers ranges from about 0.1 to 10 phr; the amount of softeners and tackifiers ranges from about 0.1 to 30 phr; the amount of processing oils or plasticizers ranges from about 1 to 150 phr; and the amount of homogenizing agents, peptizers, pigment, flame retardants, fungicides and the like ranges from about 1 to 150 phr.

Curing agents for use in the invention include sulfur-containing compounds such as elemental sulfur, 4,4'-dithiodimorpholine, thiuram di- and polysulfides, alkylphenol disulfides, and 2-morpholinodithiobenzothiazole; peroxides such as di-tertbutyl peroxide, tertbutylcumyl peroxide, dicumyl peroxide, 2,5-dimethyl-2,5-di-(tertbutylperoxy) hexane, di-(tertbutylperoxyisopropyl) benzene, tertbutyl peroxybenzoate and 1,1-di-(tertbutylperoxy)-3,3,5-trimethylcyclohexane; metal oxides such as zinc, magnesium, and lead oxides; dinitroso compounds such as p-quinone dioxime and p,p'-dibenzoylquinonedioxime; and phenol-formaldehyde resins containing hydroxymethyl or halomethyl functional groups. Mixtures of two or more curing agents can be employed in the invention though this is generally not preferred. The suitability of any of these curing agents for use in the invention will be largely governed by the choice of elastomers, as is well known to those skilled in the compounding art. For the preferred ethylene-alpha olefin-diene polymers of the invention, the sulfur-containing compounds and the peroxides are the preferred vulcanizing agents, and the sulfur-containing compounds are most preferred. The amount of the vulcanizing agent can range from about 1 to 10 parts by weight based upon 100 parts of the ethylene-alpha olefin-diene polymer.

Also, the composition can optionally contain an adhesion promoter. Illustrative adhesion promoters can include such resins as phenolic methylene donor resins, phenolic thermosetting resins, and resorcenol-formaldehyde resins. A number of the phenolic, rosin acid, and especially alkyl phenol formaldehyde resins can act both as a tackifier as well as cured adhesion promoter. Of these, octyl-phenol-formaldehyde resin is most preferred for its dual function of improved cured adhesion and tack with elastomers other than an ethylene-alpha olefin-diene polymer. However, matching the cure rate of the ethylene-alpha olefin-diene polymer of a tire sidewall compound with one or more highly unsaturated diene rubbers comprising the adjacent tire carcass will in itself promote co-cure, and, thus, improve cured adhesion. Tack necessary during the tire construction phase of tire manufacture, will also be improved because premature crosslinking is avoided because of the good cure delay obtained with the accelerator and gas phase ethylene-alpha olefin-diene polymer of the invention.

The mixing or blending of ingredients forming the composition according to the invention is performed by means well known to those skilled in the art. Such means can include, for example, a two-roll mill, Banbury mixer, Henschel mixer, extruder, or the like, in the usual manner.

Typically, the composition containing ethylene-alpha olefin-diene, e.g., EPDM, accelerator, other optional additives and curing agent is mixed in two stages. Generally, all of the ingredients, except the accelerator and sulfur ("cure package"), are added in a first stage (often referred as the "masterbatch" stage). In a second stage, the curing agent (e.g., sulfur) and the accelerator or blend of accelerators are added to the masterbatch. This second stage is often referred to as the "final" stage. Alternatively, the accelerators can be incorporated in the masterbatch, or in single stage mixing. The ingredients are mixed at a temperature and time to obtain uniform mixing. Curing temperatures and time are generally not critical and cure temperatures can range from about 250°F (121°C) to about 400°F (204°C) and cure times range from about 0.5 minutes to about 3 hours.

Independent of the method of mixing the composition, the method of curing may be chosen from the many conventionally known methods including open steam, autoclave, press or mold curing, liquid salt bath, hot air, microwave, UHF or infrared vulcanization. The method of forming an article into a desired shape is largely dependent upon the mixing and curing method chosen and known to those skilled in the forming art. Some representative methods are mold forming, extrusion, roller head die forming, die cutting, hand lay-up. And, in the case of tires, belts and hoses, virtually all of these methods are well known and are used at some point in the method of manufacturing.

The compositions containing ethylene-alpha olefin-diene polymers, accelerator, other optional additives and curing agent according to the invention, do not readily scorch, cure rapidly once the curing or vulcanization is initiated, and contain low levels of sulfur (less than 2 phr sulfur). Further, in tire formulations, these compositions provide the ability to maximize co-curing or co-vulcanization by matching the cure rate of the ethylene-alpha olefin-diene polymer contained in the composition of the invention to the cure rate of an adjacent rubber composition comprising at least one highly unsaturated diene rubber. This results in improved cured adhesion between these ethylene-alpha olefin-diene polymer formulations (e.g. in a sidewall) and an adjacent rubber (e.g. natural rubber or polybutadiene in a tire carcass). The new curable compositions produced using ethylene-alpha olefin-diene polymers polymerized in the gas phase of the invention are also less expensive than systems based on conventionally prepared and cured ethylene-alpha olefin-diene polymers such as those disclosed in U.S. Patent No. 4,645,793.

The ethylene-alpha olefin-diene polymer composition of the invention can be blended with a highly unsaturated diene rubber using means known to those skilled in the art. The highly unsaturated diene rubber and ethylene-alpha olefin-diene polymer composition can be blended together in any ratio of one polymer to the other. The weight percent of the ethylene-alpha olefin-diene polymer in the blend can be from about 1% to about 99%, preferably 10% to 95% by weight of the blend. Of course, more than one ethylene-alpha olefin-diene polymer and similarly more than one diene rubber can be employed. In such case, the ethylene-alpha olefin-diene polymers are treated as a group, and the diene rubbers are treated as a group for purposes of determining the weight percents of the polymers in the blend.

Further, in addition to being blended with a highly unsaturated diene rubber, the ethylene-alpha olefin-diene polymer compositions of the invention can be co-cured with adjacent highly unsaturated rubbers. Adjacent rubber compositions that can be employed in co-vulcanization or co-curing as well as in blend can include highly unsaturated diene rubbers such as, for example, natural rubber, polyisoprene, polybutadiene, poly(butadiene-styrene) rubber, poly(isoprene-styrene) rubber, polypenteneamer, polychloroprene, poly(butadiene-acrylonitrile) rubber, poly(isoprene-acrylonitrile) rubbers, mixtures thereof, and the like. More than one diene rubber can be employed in the adjacent rubber or blend as well as other ingredients and additives known to those skilled in the art.

A process for interfacial co-curing of a shaped elastomeric body (e.g., sidewall) containing an ethylene-alpha olefin-diene polymer, optionally containing at least one highly unsaturated rubber, adjacent to at least one highly unsaturated diene rubber article (e.g., tire carcass) comprises mixing an ethylene-alpha olefin-diene polymer, a sulfenamide, other optional additives, and a curing agent to form an elastomeric composition, forming said elastomeric composition into a shaped elastomeric body, co-curing said shaped elastomeric body onto a rubber article comprising at least one highly unsaturated diene rubber, preferably comprising a major portion (50% or more) of composition of the rubber article. The shaped elastomeric body and the rubber article are juxtaposed such that the elastomeric composition and the rubber are adjacent to and/or touching one another. The shaped elastomeric body and the rubber article are co-cured at a temperature, time, and pressure to effect intercrosslinking of the two elastomeric compositions of which they are made. These temperatures, times, and pressures are well known to those skilled in the art. In general, the co-curing temperature ranges from 120° to 210°C, the time ranges from 0.5 minutes to 3 hours, and the pressures can range from 0 to 250 psi.

The following examples are given to illustrate the invention and are not intended as limitations thereof.

### EXAMPLES

### FIRST STAGE MIXING PROCEDURE FOR EPDM (MASTERBATCH)

The first stage mixing was done in a laboratory "B" size (1685 cc. approximate mixing cavity volume) Banbury at 77 revolutions per minute rotor speed. The Banbury was preheated to 120°F and the ingredients were added as follows: one half carbon black; all of the EPDM polymer; all of the remaining "masterbatch" ingredients such as oil, zinc oxide, stearic acid, and resin; the remaining carbon black. The ram was then lowered and the masterbatch mixed for 2.5 minutes at which time the ram was raised, swept down, and again lowered. The mixing was then continued for approximately another 0.5 minutes for a total masterbatch mixing time of 3 minutes. The batch was then dumped and sheeted to a thickness of about 0.5 inches on a two-roll mill (6 in. diameter, 12 in. wide).

### SECOND STAGE MIXING PROCEDURE FOR EPDM (SECOND OR FINAL STAGE)

A two-roll (6 in. diameter, 12 in. wide) mill was preheated to 120°F. The masterbatch was then added to the mill and milled until banding on the rolls was consistently good (about 1 minute). The sulfur and accelerator (or blend of accelerators) were added to the masterbatch concurrently. Approximately 12 cross-cuts were made to help incorporate the cure package. Two end-roll passes were made, and the second stage mixing was considered complete.

### MATERIALS AND DEFINITIONS

Natural Rubber -- SMR 5 (CV60)
Polybutadiene -- Taktene 1203, Polysar®
EPDM (gas phase) available from Union Carbide Corporation:

| | EPDM 7315 | EPDM 4246 |
|---|---|---|
| Ethylene, Wt.% | 65 | 70 |
| Propylene, Wt.% | 30.5 | 24 |
| ENB, Wt.% | 4.5 | 6 |
| Carbon Black, Wt.% | 16.7 | 16.7 |
| ML/1+4 @ 125°C | 70 | 35 |

Carbon Black -- N660 Type, Cabot Corporation
Naphtenic Oil -- Sunthene® 410, Sun Oil
Zinc Oxide -- ZN® 10, Harwick Chemical Corporation Stearic Acid -- CP Hall
Antiozonant -- Santoflex® 13 (N-1,3-dimethylbutyl-N'-p-phenylenediamine), Monsanto
Antioxidant -- Flectol H® (polymerized 1,2-dihydro-2,2,4-trimethylquinoline), Monsanto
Microcrystalline Wax -- Astor Wax®, M.F. Cachey
Alkyl-Phenol-Formaldehyde Resin -- SP1068 Resin, Schenectady Chemicals, Inc.
Insoluble Sulfur-Insoluble Sulfur 60, Akzo
TBBS -- Santocure NS® (N-t-butyl-2-benzothiazyl sulfenamide), Monsanto
TETD -- Ethyl Tuex® (tetraethylthiuram disulfide), Uniroyal
TMTD -- Tuex® (tetramethylthiuram disulfide), Uniroyal

Table 1 shows several 100% EPDM formulations. Table 2 demonstrates the cure properties, tack, and cured adhesion values for the formulations of Table 1. From Table 2 it can be seen that the compositions of the invention have good scorch safety, tack, and cured adhesion.

Comparison of the cure profiles (not shown) of Sample #4 with the cure profile of the carcass compound (#5) showed that the EPDM compound of the invention had a slightly longer time before cure onset. This longer delay time resulted in very little premature crosslinking and assured good flow characteristics, high stock contact area and a high level of tack as indicated by the data in Table II. The cure profile of Sample #4 and the carcass stocks showed cure time overlap for the major portion of their cure cycles. This facilitated co-cure between these stocks and inter-stock crosslink formation in mating rubber components made from these stocks such as the tire sidewall and tire carcass components. Indeed, the cured adhesion of the stocks cured with high TBBS/low sulfur cure system showed high levels of cured adhesion and failure was due to stock tear rather than interfacial separation.

Samples A and B. Sample A in the examples is a typical conventional sidewall formulation of an polybutadiene and natural rubber. Sample B is reproduced from U.S. Patent No. 4,645,793 (Formulation #18 of Table 6) and illustrates that an all EPDM sidewall in which the EPDM was not polymerized in the gas phase does not produce a satisfactory sidewall. The high molecular weight EPDM employed in Sample B is EPDM 5875 sold by Polysar Limited, Sarnia, Ontario, Canada and made by conventional non-gas phase procedures.

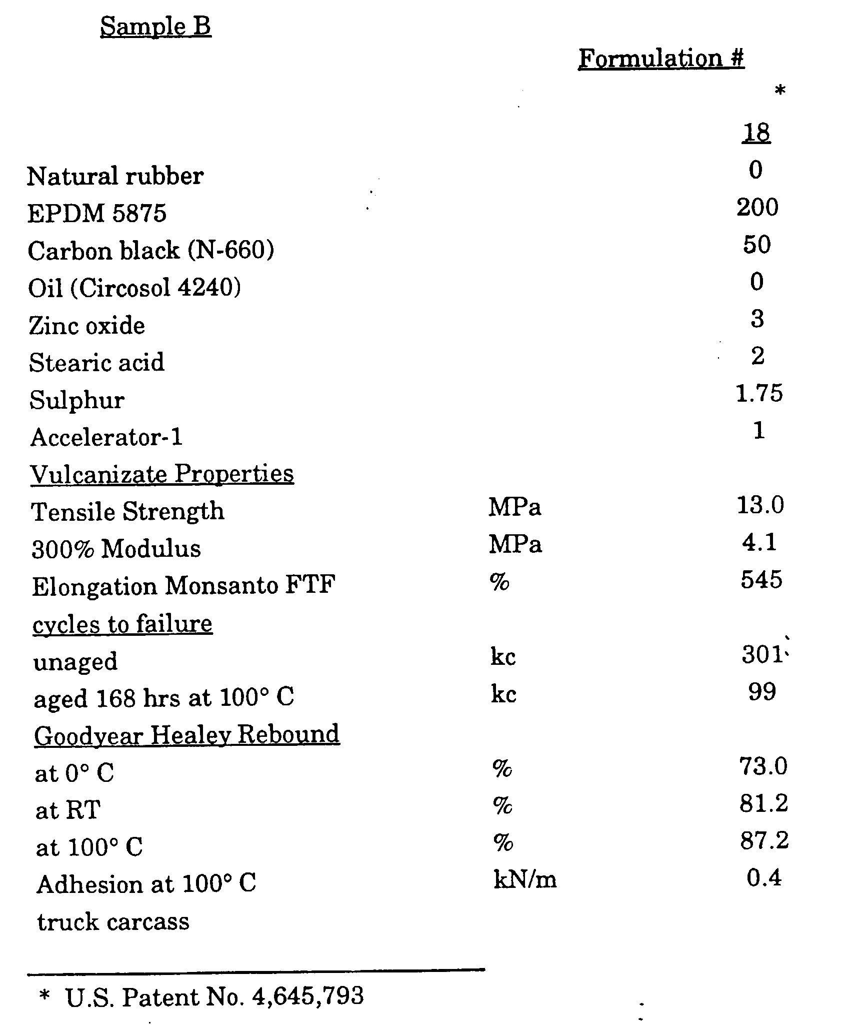

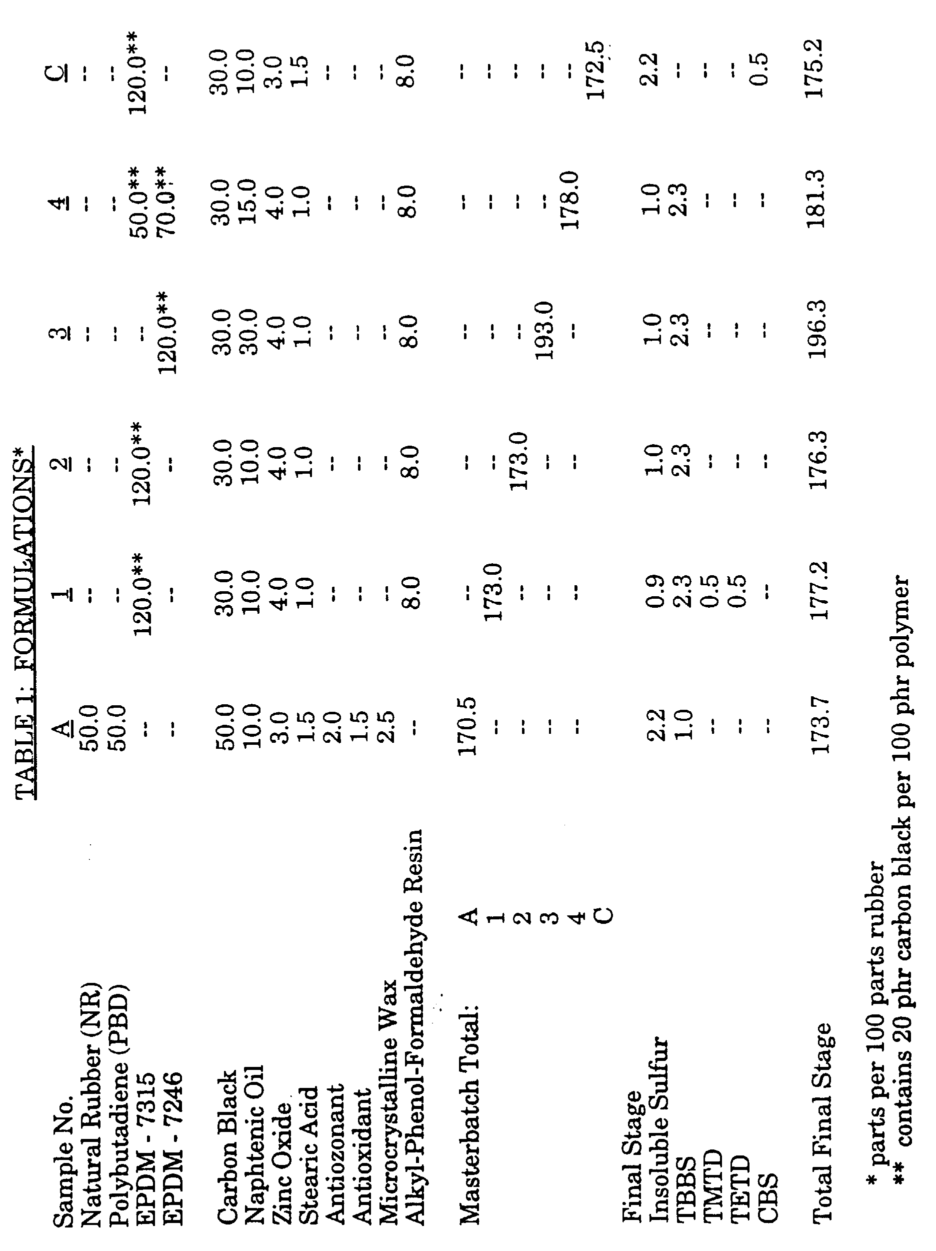

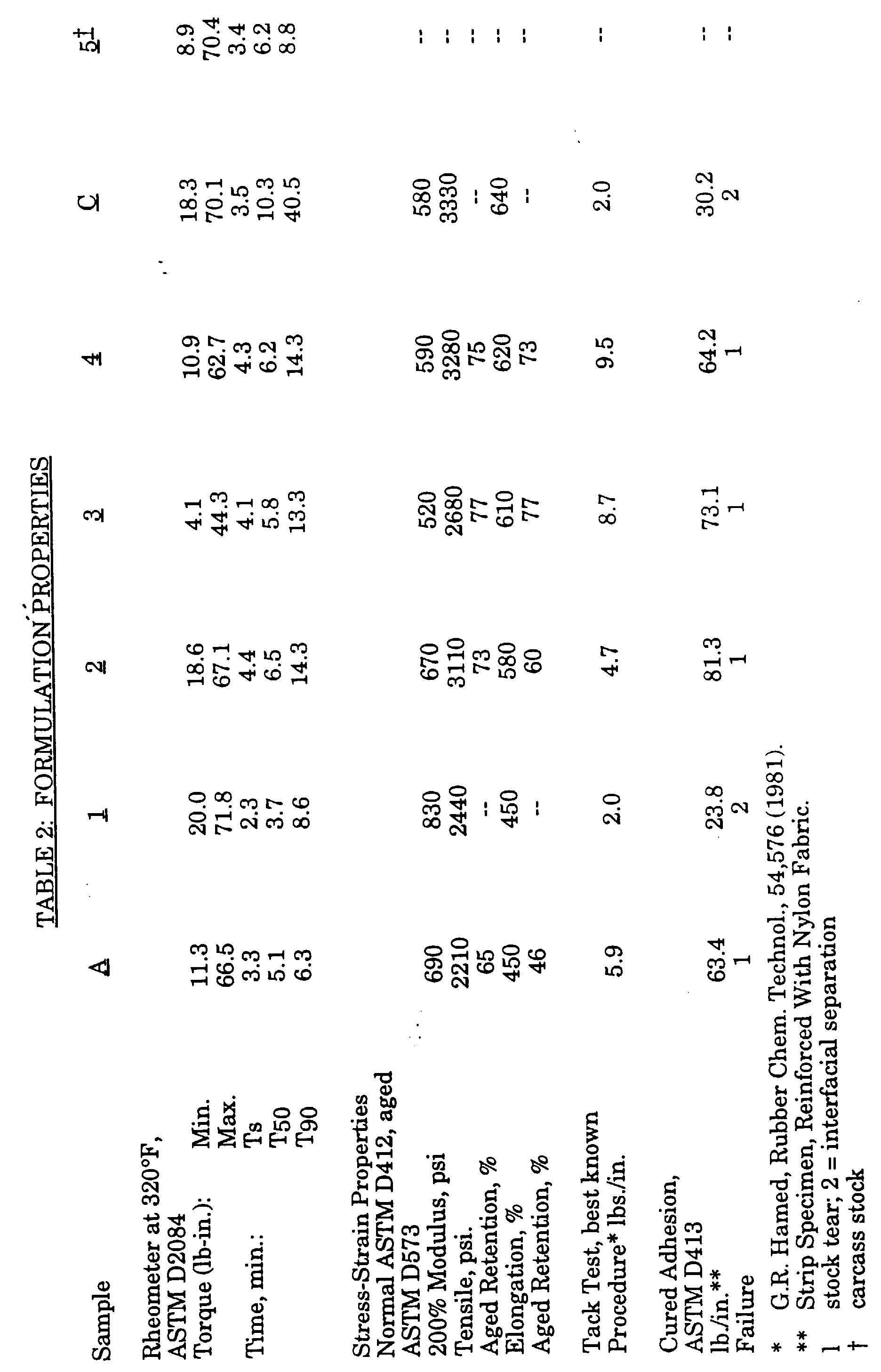

### TACK TEST SPECIMEN CONFIGURATION AND TESTING

### Tack Component A

- Sheet the rubber to 0.040" thickness and cut to 6" x 6", with milling direction indicated.
- Cut fabric (TT216 nylon or other) to 6" x 6".
- Cover both sides of fabric with a component rubber with the milling direction being parallel to the direction of the fabric cord.
- Label as component A.
- Place 6" x 6" Mylar® on both sides of finished Component A.
- Mold Component A in 0.100" positive pressure (1000 Lb.) mold for 5 minutes at 212°F.

### Tack Component B

- Same as with Component A except appropriately labeled as Component B.

### Tack Specimen Configuration

- Cut three (3) test samples from Component A having the following dimensions: 1.5" x 6" -- the long dimension being the milling/cord direction.
- Cut three (3) test samples from Component B having the following dimensions: 1" x 6" - the long dimension again being the milling/cord direction.
- Remove 6" x 6" Mylar® from one side of both Components A and B and place a Mylar® spacer 1.4" x 2" at one end of the cut Component A, the 2" dimension being along the length of the specimen.
- Place Component B on top of component A with the Mylar® free sides mating, and apply slight pressure so that the two components don't separate.
- Place specimen into pressure applicator, separator end first, and roll through pressure applicator--first in forward direction then in backward direction.

### Tack Testing

- Place in Instron® jaws and pull at 2"/min. at 23°C. and record data.

### CURED ADHESION TEST SPECIMEN CONFIGURATION AND TESTING

### Adhesion Component A

- Sheet the rubber to 0.055 thickness and cut to 6" x 6", indicate milling direction on sample.
- Cut fabric (TT 216 nylon or other) to 6" x 6".
- Cover both sides of fabric with a component rubber, rubber milling direction should be parallel to direction of cord in fabric.
- Label specimen with stock number make sure milling direction is obvious.

### Adhesion Component B

- Same as with Component A, except labeled as Component B.

### Adhesion Specimen Configuration

- Place a 2" x 6" piece of Mylar® at one of the cut cord ends of Component A specimen with the 6" dimension perpendicular to the direction of the cord.
- Place Component B on top of Component A on the Mylar® side with the cord direction same as Component A, and roll finished specimen.
- Cure the finished test specimen making sure that component identification is clear.

### Adhesion Testing

- Cut three (3) test samples (1" x 6") from the cured specimen with the long direction being the same as the cord/milling direction.
- Specimen clamp in Instron® at the A/B ends provided by the Mylar® insert.
- Pull specimen at 2"/minute and 23°C., and record data.

## Claims

1. A composition comprising (i) a particulate ethylene-alpha olefin-diene elastomer and (ii) an accelerator which is a sulfenamide, a thiazole, a dithiocarbamate, a thiuram, a xanthate, a thiourea, a guanidine, or a mixture thereof.

2. A composition as claimed in Claim 1 wherein the particulate ethylene-alpha olefin-diene elastomer is polymerized in a gas phase process optionally in the presence of an inert particulate material which is carbon black, silica, clay, talc, or a mixture thereof; wherein the diene of the elastomer is a non-conjugated diene which is 1,4-hexadiene, 5-ethylidene-2-norbornene, dicyclopentadiene, or a mixture thereof; and the alpha olefin is propylene; wherein the accelerator is a sulfenamide which is a benzothiazolsulfenamide, a thiocarbamylsulfenamide, or a mixture thereof; and wherein the composition optionally contains a curing agent which is elemental sulfur, a sulfur-containing compound, a peroxide, or a mixture thereof.

3. A composition as claimed in claim 1 wherein
the sulfenamide is 4-morpholinyl-2-benzothiazole disulfide; N-oxydiethylene-2-benzothiazolesulfenamide; N-cyclohexyl-2-benzothiazolesulfenamide; N-isopropyl-2-benzothiazole-sulfenamide; N-tert-butyl-2-benzothiazolesulfenamide; N,N-dicyclohexyl-2-benzothiazole-sulfenamide; N,N-diethyl-2-benzothiazolesulfenamide; N,N-diisopropyl-2-benzothiazole-sulfenamide; N-cycloalkylbis(2-benzothiazolsulfen)amides; N-cyclohexylbis(2-benzothiazole)-sulfenamide; N-isopropylbis(2-benzothiazole)sulfenamide; N-tert-octylbis(2-benzothiazole)sulfenamide; N-tert-amylbis(2-benzothiazole)-sulfenamide; N-isobutylbis(2-benzothiazole)sulfenamide; N-tert-butylbis(2-benzothiazole)sulfenamide; N-benzylbis(2-benzothiazole)-sulfenamide; N-dibenzylbis(2-benzothiazole)sulfenamide; N-oxydiethylenethiocarbamyl-N'-oxy-diethylene-sulfenamide, N,N-di(2-ethylhexyl)thiocarbamyl-N',N'-dicyclohexylsulfenamide, N,N-di-tetradecylthiocarbamyl-N',N'-dicycloheptylsulfenamide, N,N-dioctadecylthiocarbamyl-N',N'-dicyclohexylsulfenamide, N,N-dieicosylthiocarbamyl-N',N'-dicyclohexylsulfenamide, or a mixture thereof;
the thiazole is benzothiazole disulfide, 2-mercaptobenzothiazole or 2,2'-mercapto-benzothiazole disulfide, zinc 2-mercaptobenzothiazole, or a mixture thereof;
the dithiocarbamate is bismuth dimethyldithiocarbamate, activated dithiocarbamate, cadmium diamyldithiocarbamate, cadmium diethyldithiocarbamate, copper dimethyldithiocarbamate, lead diamyldithiocarbamate, lead dimethyldithiocarbamate, selenium diethyldithiocarbamate, selenium dimethyldithiocarbate, tellurium diethyldithiocarbamate, zinc diamyldithiocarbamate, zinc di-n-butyldithiocarbamate, zinc diethyldithiocarbamate, zinc dimethyldithiocarbamate or a mixture thereof;
the thiuram is dipentamethylene thiuram hexasulfide, tetrabutylthiuram disulfide, a blend of 1 part 2-mercaptobenzothiazole and 2 parts tetramethylthiuram, tetraethylthiuram disulfide, a 60:40 blend of tetramethylthiuram and tetraethylthiuram, tetramethylthiuram, tetramethylthiuram monosulfide or a mixture thereof;
the xanthate is zinc isopropyl xanthate; and
the thiourea is trimethylthiourea, 1,3-diethylthiourea, 1,3-dibutylthiourea, or a mixture thereof.

4. A composition which comprises a composition as claimed in any one of claims 1 to 3 and a highly unsaturated rubber which is natural rubber, polybutadiene, polyisoprene, a polymer of butadiene copolymerized with styrene, poly(isoprene-styrene), a polypentenamer, polychloroprene, poly(isoprene-acrylonitrile), poly(butadiene-acrylonitrile), or a mixture thereof; and wherein the highly unsaturated rubber is optionally polymerized in the gas phase in the presence of an inert particulate material.

5. A process for interfacial co-curing of an ethylene-alpha olefin-diene shaped elastomeric body adjacent to a rubber article which comprises (i) mixing a composition as claimed in any one of claims 1 to 3, a curing agent, and optionally at least one highly unsaturated rubber to form an elastomeric composition; (ii) forming the elastomeric composition into a shaped elastomeric body; (iii) co-curing the shaped elastomeric body onto a rubber article comprising a highly unsaturated rubber, the highly unsaturated rubber optionally being polymerized in the gas phase optionally in the presence of an inert particulate material.

6. A composition comprising (i) an ethylene-propylene-diene elastomer, (ii) a sulfenamide which is benzothiazolsulfenamide, a thiocarbamylsulfenamide, or a mixture thereof; wherein
the benzothiazolsulfenamide is 4-morpholinyl-2-benzothiazole disulfide; N-oxydiethylene-2-benzothiazole-sulfenamide; N-cyclohexyl-2-benzothiazole-sulfenamide; N-isopropyl-2-benzothiazole-sulfenamide; N-tert-butyl-2-benzothiazolesulfenamide; N,N-dicyclohexyl-2-benzothiazole-sulfenamide; N,N-diethyl-2-benzothiazole-sulfenamide; N,N-diisopropyl-2-benzothiazolesulfenamide N-alkyl; N-cycloalkylbis(2-benzothiazolsulfen)amides; N-cyclohexylbis(2-benzothiazole)sulfenamide; N-isopropylbis(2-benzothiazole)sulfenamide; N-tert-octylbis(2-benzothiazole)sulfenamide; N-tert-amylbis(2-benzothiazole)sulfenamide; N-isobutylbis(2-benzothiazole)sulfenamide; N-tert-butylbis(2benzothiazole)sulfenamide; N-benzylbis(2-benzothiazole)sulfenamide; N-dibenzylbis(2-benzothiazole)sulfenamide or a mixture thereof;
and the thiocarbamylsulfenamide is N-oxydiethylenethiocarbamyl-N'-oxydiethylenesulfenamide, N,N-di(2-ethylhexyl)thiocarbamyl-N',N'-dicyclohexylsulfenamide, N,N-ditetradecylthiocarbamyl-N',N'dicycloheptylsulfenamide, N,N,-dioctadecylthiocarbamyl-N',N'-dicyclohexylsulfenamide, N,N-dieicosylthiocarbamyl-N',N'-dicyclohexyl-sulfenamide or a mixture thereof;
optionally (iii) a curing agent which is sulfur, a sulfur-containing compound, a peroxide or a mixture thereof;
and optionally (iv) a highly unsaturated rubber which is natural rubber, polybutadiene, polyisoprene, a polymer of butadiene copolymerized with styrene, poly(isoprene-styrene), a polypentenamer, polychloroprene, poly(isoprene-acrylonitrile), poly(butadiene-acrylonitrile) or a mixture thereof.

7. A process for interfacial co-curing of an EPDM shaped elastomeric body adjacent to a rubber article which comprises (i) mixing an ethylene-propylene-diene elastomer, a sulfenamide accelerator, a curing agent, and optionally an unsaturated rubber to form an elastomeric composition; (ii) forming the said elastomeric composition into a shaped elastomeric body; (iii) co-curing the shaped elastomeric body onto a rubber article comprising a highly unsaturated rubber, wherein the highly unsaturated rubber is natural rubber, polybutadiene, polyisoprene, a polymer of butadiene copolymerized with styrene, poly(isoprene-styrene), a polypentenamer, polychloroprene, poly(isoprene-acrylonitrile), poly(butadiene-acrylonitrile) or a mixture thereof.

8. A tire sidewall comprising a composition as claimed in any one of claims 1 to 4, or 6.

9. A tire produced according to the process as claimed in claim 5 or claim 7.
